(19) Europäisches Patentamt
European Patent Office
Office européen des brevets

(11) **EP 3 541 599 B1**

(12) **EUROPÄISCHE PATENTSCHRIFT**

(45) Veröffentlichungstag und Bekanntmachung des Hinweises auf die Patenterteilung:
**24.06.2020   Patentblatt 2020/26**

(21) Anmeldenummer: **17808305.1**

(22) Anmeldetag: **06.11.2017**

(51) Int Cl.:
***B29C 49/78*** (2006.01)    ***B29C 49/06*** (2006.01)
***B29C 49/12*** (2006.01)    ***B29C 49/42*** (2006.01)
***B29L 31/00*** (2006.01)

(86) Internationale Anmeldenummer:
**PCT/DE2017/000366**

(87) Internationale Veröffentlichungsnummer:
**WO 2018/091006 (24.05.2018 Gazette 2018/21)**

(54) **VORRICHTUNG UND VERFAHREN ZUR STEUERUNG DES BLASFLUIDDURCHFLUSSES BEIM BLASFORMEN VON BEHÄLTERN**

DEVICE AND METHOD FOR CONTROLLING THE THROUGHFLOW OF BLOW-MOLDING FLUID DURING THE BLOW MOLDING OF CONTAINERS

DISPOSITIF ET PROCÉDÉ POUR COMMANDER LE DÉBIT DE FLUIDE DE SOUFFLAGE LORS DU MOULAGE PAR SOUFFLAGE DE RÉCIPIENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2016   DE 102016013635**

(43) Veröffentlichungstag der Anmeldung:
**25.09.2019   Patentblatt 2019/39**

(73) Patentinhaber: **Aventics GmbH**
**30880 Laatzen (DE)**

(72) Erfinder:
• **BUSCH, Christian**
**30659 Hannover (DE)**
• **MEYER, Heinz-Herrmann**
**30926 Seelze (DE)**
• **PAULUS, Theo**
**46509 Xanten (DE)**
• **PETITJEAN, Francis**
**74130 Bonneville (FR)**

(74) Vertreter: **Spahn, Tobias et al**
**BBS Bier Brehm Spahn**
**Partnerschaft Rechtsanwälte**
**Brandstwiete 46**
**20457 Hamburg (DE)**

(56) Entgegenhaltungen:
**EP-A1- 3 015 248        DE-A1- 10 240 252**
**DE-A1-102006 061 301    DE-A1-102008 013 419**
**US-A1- 2015 042 021**

## Beschreibung

### Technisches Gebiet

Die Erfindung betrifft eine Vorrichtung und ein Verfahren zur Steuerung des Blasfluiddurchflusses beim Blasformen von Behältern.

### Stand der Technik

Im Stand der Technik ist die Herstellung von Hohlkörpern aus thermoplastischen Kunststoffen mittels eines Blasfluids (Blasluft, ein Blasgas oder auch eine Flüssigkeit) als Blasformen oder Blasformung bekannt. Dabei wird ein thermisch vorkonditionierter (erwärmter) Vorformling (im Stand der Technik auch als Preform bezeichnet) im fließfähigen Zustand durch die Einleitung des Blasmediums (das Blasfluid) mit einem definierten Blasdruck an die innseitigen Konturen eines Blaswerkzeugs (die Blasform) geformt. Auf diese Weise lassen sich Verpackungsartikel wie Flaschen, Kanister oder Fässer herstellen. Beim Streckblasenformen erfolgt eine Verstreckung des Hohlkörpers oberhalb seiner Glasübergangs- oder Kristallitschmelztemperatur gleichzeitig in Umfangs- und Längsrichtung. Hierbei werden aufgrund der gleichzeitigen biaxialen Neuorientierung der Makromoleküle des Kunststoffs verbesserte mechanischen Eigenschaften (höhere Festigkeit bei geringerer Wanddicke, Permeationsreduzierung, stärkerer Oberflächenglanz) erreicht. Der erwärmte Vorformling wird bei diesem Verfahren simultan zur Umfangsverstreckung durch das Blasfluid mechanisch durch einen Stempel oder eine Reckstange in Längsrichtung verstreckt. Das Einleiten des Blasfluids in den erwärmten Vorformling erfolgt bei der Blasformung oder Streckblasformung in der Regel in zwei Phasen, einer Vorblasphase mit einem niedrigeren Druckniveau im Bereich von etwa 5 bis 10 bar und einer Fertigblasphase (Hauptblasphase) mit einem höheren Druckniveau im Bereich von etwa 25 bis 40 bar. Die Vorblasphase dient der möglichst gleichmäßigen Expansion des Vorformlings innerhalb der Blasform und dessen Formung entlang der innseitigen Konturen der Blasform. In der Fertigblasphase erfolgt die endgültige Druckausformung des Behälters (auch als "Ausblasen" bezeichnet), bei der der expandierte Vorformling an die Wände der Blasform gepresst wird und seine endgültigen Konturen erhält. Bei der Streckblasformung erfolgt während der Vorblasphase simultan die Längsverstreckung durch das lineare Ausfahren des Stempels oder der Reckstange und die Umfangsverstreckung durch das Blasfluid. Das praktische Bedürfnis nach räumlich immer komplexeren Behälterformen bei einer gleichzeitig möglichst energie- und materialeffizienten Herstellung erfordert eine möglichst genaue Steuerung oder Regelung der Einleitung des Blasfluids in den Vorformling bereits in der Vorblasphase des Blasformprozesses. Während der Vorblasphase soll ein definiertes Wachstum der Behälterblase und eine möglichst gleichmäßige oder definierte Materialverteilung im expandierten Vorformling erreicht werden, die in der Haupt- oder Fertigblasphase nicht mehr wesentlich korrigiert werden kann. Die expandierende Behälterblase soll hierbei entweder einen möglichst konstant engen Abstand zu den innenseitigen Konturen des Blaswerkzeugs (der Blasform) einhalten, ohne die Werkzeugwand bereits zu berühren oder aber am Ende der Vorblasphase nur in definierten Bereichen bereits an dieser anliegen.

Zur Steuerung oder Regelung der Einleitung des Blasfluids wurden im Stand der Technik unterschiedliche Lösungsansätze und -wege vorgeschlagen.

Grundsätzliche Ausführungen einer Anlage und eines Verfahrens zur Streckblasformung von Behältern aus einem thermoplastischen Material sind im Stand der Technik der DE 198 43 053 A1 beschrieben. Die DE 198 43 053 A1 offenbart darüber hinaus eine Parametersteuerung, von der mindestens ein den Umformungsvorgang beeinflussender Parameter für mindestens zwei zeitlich nacheinander verarbeitete Vorformlinge voneinander abweichend vorgegeben wird, indem beispielsweise der Druckverlauf der Vorblas- und Hauptblasphase für zwei Behälter relativ zueinander unterschiedlich vorgegeben wird. Dies dient der Kompensation einer relativ zueinander ungleichen Temperaturverteilung im Material der Vorformlinge. Die DE 198 43 053 A1 offenbart keine Mittel zur einer an die spezielle Formgebung eines Behälters angepassten Steuerung oder Regelung des Druckmitteldurchflusses während der Vorblasphase eines Behälters.

Aus der DE 20 2004 018 237 U1 ist eine Ventilanordnung zur Druckluftsteuerung bei der Blasherstellung von Kunststoffflaschen mit einem variabel einstellbaren Drosselventil bekannt, welches die anwendungsspezifische variable Vorgabe der Durchflussrate als offenen Wirkungskette ermöglicht.

Die DE 102 40 252 A1 offenbart ein Verfahren und eine Vorrichtung zur Streckblasformung von Behältern mit einem optimierten Prozessverlauf. Hierzu sind in einer Versorgungsleitung zwischen einer Druckluftquelle und der Blasform ein Proportionalventil und ein Drucksensor angeordnet, wobei das Proportionalventil in einem geschlossenen Wirkungskreis (Regelkreis) von einer Regeleinrichtung anhand eines zeitlich vorgegebenen, in einem Verlaufsspeicher als Sollwertprofil gespeicherten Druckverlaufs geregelt wird. Mit dem Verfahren und der Vorrichtung wird die Vorgabe eines definierbaren Druckverlaufs in der Vorblasphase ermöglicht.

Die gemeinsam auf die französische Prioritätsanmeldung FR 0610618 A zurückgehenden Patentschriften EP 2 101 984 B1, EP 2 097 242 B1 und EP 2 094 467 B1 offenbaren verschiedene Ausführungen eines Verfahrens und einer Steuereinheit zur Streckblasformung von Behältern aus einem Vorformling aus Kunststoff, bei welchen ein Elektroventil während der Vorblasphase anhand eines vorgegebenen Verlaufs gesteuert und der Druckverlauf im Vorformling kontinuierlich erfasst wird. Charakteristische Punkte im gemessenen Druckverlauf (beispielsweise das Erreichen einer Druckspitze) werden ermittelt und die erreichten Werte (Zeitpunkt der Druckspitze, erreichter Druckwert) mit vorgegeben theoretischen Werten einer theoretischen Verlaufskurve verglichen. Stimmen die Werte nicht miteinander überein und liegen außerhalb einer definierten Toleranzzone, erfolgt für die Steuerung ab einem der nächsten Verfahrensdurchläufe für die Behälterherstellung entweder eine Modifizierung vorgegebener Verfahrensparameter (beispielsweise des Vorblasdrucks, Vorblasdurchsatzes, der Reckgeschwindigkeit oder Vorheiztemperatur des Vorformlings) oder eine zeitliche Verschiebung des vorgegebenen Verfahrensablaufs (Modifizierung des Vorblassynchronisierpunktes, des Vorblasformbeginns oder der Vorblasauslösezeit).

Aus der DE 10 2006 061 301 A1 ist ein Verfahren zur Blasformung von Behältern aus Kunststoff bekannt, bei welchem unter Druck stehende Blasluft über ein Proportionalventil in Abhängigkeit von einem vorbestimmten Ablauf des Blasvorgangs in einen Vorformling eingeleitet wird, wobei das Proportionalventil in einer offenen Wirkungskette gemäß einem vorgegebenen Verlauf des Massenstroms betätigt und sein Durchflussquerschnitt verändert wird. Alternativ oder zusätzlich kann eine Regelung des Proportionalventils in einem geschlossenen Wirkungskreis erfolgen, indem der tatsächliche Massenstrom beispielsweise mittels eines Durchflussmessers bestimmt wird.

Die DE 10 2008 013 419 A1 offenbart ein Verfahren und eine Vorrichtung zur Blasformung von Behältern aus einem Vorformling aus thermoplastischen Material, bei welchen während der Umformung des Vorformlings in den Behälter mindestens ein die Umformung charakterisierender Parameter gemessen und von einer Steuereinrichtung ausgewertet wird und in Abhängigkeit von dieser Auswertung der Entwicklung der Behälterblase mindestens eine den Umformungsvorgang beeinflussende Stellgröße innerhalb eines geschlossenen Regelkreises zum Angleichen des gemessenen Parameters an einen zugehörigen Sollwert verändert wird.

Den im Stand der Technik bekannten Vorrichtungen und Verfahren ist gemein, dass eine Steuerung oder Regelung des Blasluft-Durchflusses in einer offenen Wirkungskette oder einem geschlossenen Wirkungskreis anhand einer als Verlauf vorgegebenen zeitlich veränderlichen Führungsgröße (Sollwertverlauf über die Zeit) erfolgt. Dies erfordert jeweils die vorherige Erstellung eines Sollwertprofils oder einer Sollwertkurve für die Entwicklung des vorgegebenen Wertes über den zeitlichen Verlauf des Blasvorgangs oder zumindest der Vorblasphase hinweg. Ein solches Sollwertprofil oder eine solche Sollwertkurve muss für jede Materialmischung und Behälterform und jeden Maschinentyp gesondert in zeitaufwendigen Vorversuchen zunächst erprobt und definiert werden. Dies erfolgt in der Praxis per "trial and error", was je nach Verlauf der Vorversuche ein sehr zeitaufwändiger Prozess sein kann. Ferner birgt die Vorgabe eines festen Sollwertprofils oder Sollwertkurve den weiteren Nachteil, dass vom jeweiligen Sollwertprofil nicht erfasste Störgrößen (bspw. veränderte Materialeigenschaften und Abmessungstoleranzen des Vorformlings, Verschleißeffekte der beteiligten Bauteile, aufgrund äußerer Einflüsse schwankende Verarbeitungstemperaturen innerhalb der Behälterform) aufgrund der starren Vorgabe eines Werteverlaufs nur unzureichend berücksichtigt werden können.

## Offenbarung der Erfindung

Der Erfindung liegt die Aufgabe zu Grunde, eine verbesserte Steuerungsvorrichtung und ein verbessertes Steuerungsverfahren zum Blasformen von Behältern zu schaffen, welche die dargestellten Nachteile vermeiden. Insbesondere sollen eine Steuerungsvorrichtung und ein Steuerungsverfahren zum Blasformen von Behältern geschaffen werden, die ein kontrolliertes oder definiertes Wachstum und eine definierte Ausbreitung der durch den expandierenden Vorformling gebildeten Behälterblase in der Vorblasphase des Blasformprozesses ohne Vorgabe eines konkreten Sollwertprofils oder einer Sollwertkurve ermöglichen.

Die Aufgabe wird erfindungsgemäß durch eine Steuerungsvorrichtung nach Anspruch 1 und ein Steuerungsverfahren nach Anspruch 9 gelöst. Vorteilhafte Weiterbildungen der Erfindung sind in den Unteransprüchen angegeben.

Der Kern der Erfindung bildet eine Vorrichtung zur Steuerung des Blasfluiddurchflusses beim Blasformen (im Folgenden zusammenfassend auch als "Steuerungsvorrichtung" bezeichnet) von Behältern aus Vorformlingen, die ein Proportionalventil mit einem veränderbaren Durchflussquerschnitt, ein Stellglied zur Betätigung des Proportionalventils, ein Mittel zur Erfassung der Position des Stellglieds, Sensormittel zur Erfassung des Ventileingangs- und Ventilausgangsdrucks und eine digitale Steuerungseinrichtung umfasst und bei der die digitale Steuerungseinrichtung programmtechnisch dazu eingerichtet ist, während der Vorblasphase ab dem Erreichen eines vorgebbaren Zeitpunkts, der dem Erreichen der Streckgrenze des Vorformlings entspricht, zur Laufzeit automatisiert zyklisch Steuerwerte für die Betätigung des Stellglieds zum Erreichen eines vorgebbaren Behältervolumens innerhalb eines vorgebbaren Zeitraums zu berechnen, wobei in jedem zyklischen Berechnungszyklus die Berechnung des jeweils nächsten Steuerwerts unter Berücksichtigung des bis zum jeweiligen Berechnungszeitzyklus erreichten, anhand der bisherigen Stellgliedpositionen und des bisherigen Druckverlaufs berechenbaren Behältervolumens erfolgt.

Der Begriff des Blasformens wird im Sinne der Erfindung als Oberbegriff für Blasformen oder Streckblasformen verwendet, die erfindungsgemäße Vorrichtung und das erfindungsgemäße Verfahren können zur Steuerung beider Verfahrensformen Anwendung finden.

Die Erfindung hat erkannt, dass ein definiertes Behälterwachstum in der Vorblasphase eines Blasformprozesses einfach erreicht wird, indem der benötigte Blasfluiddurchfluss eines Proportionalventils anhand der Vorgabe des gewünschten Behältervolumens und des Zeitraums zur Erreichung dieses Volumens als Folge von Steuerwerten für die Betätigung des Proportionalventils zur Laufzeit automatisiert zyklisch berechnet wird, wobei das bis zum jeweiligen Berechnungszyklus bereits erreichte, anhand der erfassten bisherigen Stellgliedpositionen und des erfassten bisherigen Druckverlaufs berechenbare Behältervolumen jeweils berücksichtigt wird. Hierdurch kann auf die zeitaufwändige Erprobung und Definition eines Sollwertprofils oder einer Sollwertkurve mit diskreten Werten über die Zeit für die Betätigung des Proportionalventils verzichtet werden. Die Parametrierung der jeweiligen Blasstation wird erheblich vereinfacht. Die erfindungsgemäße Steuerungsvorrichtung setzt hierzu an den Zeitpunkt des Erreichens der Streckgrenze des Vorformlings an, ab dem die Expansion des Vorformlings und damit die Ausbreitung der Behälterblase innerhalb der Blasform beginnt. Dieser lässt sich in Vorversuchen erforderlichenfalls erheblich einfacher ermitteln, als ein vollständiges Sollwertprofil oder eine Sollwertkurve für die erforderliche Vorgabe der zeitlichen Entwicklung eines Steuerungs- oder Regelungsparameters (Blasdruck, Blasfluiddurchfluss oder Massenstrom des Blasfluids) über den gesamten zeitlichen Verlauf der Vorblasphase hinweg. Der genaue Zeitpunkt des Erreichens der Streckgrenze bei der Blasformung ist eine materialspezifische Eigenschaft und bezeichnet das Erreichen des Spannungszustandes, ab dem ein Fließen des Materials des Vorformlings einsetzt, ohne dass die anliegende Spannung weiter erhöht wird. Ab dem Überschreiten der Streckgrenze zeigt sich eine plötzliche plastische Verformung als Expansion des Vorformlings. Hierbei setzt aufgrund des beginnenden Behälterwachstums ein plötzlicher Druckabfall auf der Arbeitsseite des Systems und mithin am Ausgang des Proportionalventils ein. Der Effekt des Überschreitens der Streckgrenze beim Blasformen von Vorformlingen aus Kunststoff ist im Stand der Technik durch die auf die gemeinsame französische Prioritätsanmeldung FR 0610618 A zurückgehenden Patentschriften EP 2 101 984 B1, EP 2 097 242 B1 und EP 2 094 467 B1 sowie die zu dieser Patentfamilie gehörende Patentschrift US 8,721,940 B2 beschrieben, wobei die Streckgrenze in der US 8,721,940 B2 als "plastic flow treshold" und der Zeitpunkt des Überschreitens der Streckgrenze als "development moment $t_B$" bezeichnet ist. Ab diesem Zeitpunkt, der erfindungsgemäß vorgegeben wird, setzt das das Steuerungsverhalten der erfindungsgemäßen Vorrichtung ein, indem durch die entsprechend programmtechnisch eingerichtete Steuerungseinrichtung zur Laufzeit automatisiert zyklisch Steuerwerte für die zukünftige Betätigung des Stellglieds zum Erreichen des vorgegebenen Behältervolumens innerhalb eines vorgegebenen Zeitraums berechnet werden, wobei in jedem Berechnungszyklus die Berechnung des jeweils nächsten Steuerwerts unter Berücksichtigung des bis zum jeweiligen Berechnungszyklus bereits erreichten Behältervolumens erfolgt, das mittels der erfassten Stellgliedpositionen und Sensorenwerte (bisherige Verläufe des Ventileingangs- und Ventilausgangsdrucks) berechenbar ist. Hierzu umfasst die programmtechnische Einrichtung der Steuerungseinrichtung Anweisungen, mit denen ein entsprechendes, gemäß den allgemeinen Gesetzmäßigkeiten der Strömungsmechanik mit den bekannten Zusammenhängen zwischen den Größen Volumenstrom und Massenstrom gebildetes, geeignetes technisches Steuerungsmodell abgebildet ist, nach dem die Berechnung des jeweils nächsten Steuerwerts für die Betätigung des Stellglieds zum Erreichen des vorgegebenen Behältervolumens innerhalb des hierfür vorgegebenen Zeitraums unter Berücksichtigung des bisher bereits erreichten Behältervolumens als Steuerwertfolge automatisiert zyklisch erfolgt. Die erfindungsgemäße Vorrichtung besitzt den Vorteil, dass ein kontrolliertes Wachstum und eine definierte Ausbreitung der Behälterblase in der Vorblasphase des Blasformprozesses erreicht wird, ohne dass die Vorgabe eines Sollwertprofils oder einer Sollwertkurve für einen Regelungsparameter, wie beispielsweise den Blasdruck, den Blasfluiddurchfluss oder den Massenstrom des Blasfluids über den zeitlichen Verlauf der Vorblasphase hinweg notwendig ist. Das Behälterwachstum wird allein durch das vorgegebene, innerhalb eines ebenfalls vorgegebenen Zeitraums zu erreichende Behältervolumen definiert. Hierbei ist der erfindungsgemäßen Vorrichtung eine fortlaufende Selbstkorrektur immanent, indem in jedem Berechnungszyklus das jeweils bereits erreichte errechenbare Behältervolumen berücksichtigt wird. Der Einfluss von nicht direkt erfassbaren Störgrößen, wie beispielsweise Abweichungen in den Materialeigenschaften des Vorformlings, durch Verschleißeffekte der beteiligten Bauteile bedingte Veränderungen, oder äußere Einflüsse, wie etwa schwankende Verarbeitungstemperaturen innerhalb der Behälterform oder der thermischen Vorkonditionierung des Vorformlings werden mittelbar bzw. indirekt durch die zyklische Neuberechnung des jeweils nächsten Steuerwerts jeweils unter Berücksichtigung des bis zum Berechnungszeitpunkt bereits erreichten Behältervolumens kompensiert. Das jeweils rechnerisch ermittelbare, bislang erreichte Behältervolumen beinhaltet hierbei aufgrund der Berücksichtigung des von den Sensormitteln erfassten tatsächlichen bisherigen Druckverlaufs (Entwicklung der Differenz des Ventileingangs- zum Ventilausgangsdruck) ein praktisches Korrekturmoment, mit dem durch Störgrößen bedingte relevante Veränderungen im System indirekt erfasst und bei der Berechnung der Steuerwerte sukzessive berücksichtigt werden. Da erfindungsgemäß jedes Proportionalventil mit einer eigenen Steuerungseinrichtung ausgebildet ist, können innerhalb derselben Blasformanlage einzelne Blasstationen unabhängig voneinander betrieben werden, da jede Steuerungseinrichtung unabhängig voneinander und unterschiedlich zueinander parametrierbar ist. Dies ermöglicht die gleichzeitige Herstellung voneinander unterschiedlicher Behälterformen und/oder die Verarbeitung unterschiedlicher Materialmischungen an den einzelnen Blasstationen einer Blasformanlage.

Der Zeitpunkt, der dem Erreichen der Streckgrenze des Vorformlings entspricht, ist in einfacher Weise als spezifischer Druckwert vorgebbar. Bis zum Erreichen der Streckgrenze wird im Vorformling durch die Einleitung des Blasfluids ein kontinuierlicher Druckanstieg bewirkt. Ab dem Überschreiten der Streckgrenze beginnt die Expansion des Vorformlings, was mit einem augenblicklichen Druckabfall auf der mit der Blasform und der sich in ihr ausbreitenden Behälterblase in Verbindung stehenden Arbeitsseite des Proportionalventils verbunden ist. Unmittelbar vor dem Erreichen der Streckgrenze wird mithin ein maximaler Druckwert erreicht, der mit dem Sensormittel zur Erfassung des Ventilausgangsdrucks erfassbar ist. Indem dieser maximale Druckwert, der dem Erreichen der Streckgrenze entspricht, vorgegeben ist, ist der Zeitpunkt des Erreichens der Streckgrenze für die Steuerungseinrichtung somit erfassbar und als Startzeitpunkt für die Berechnung der Steuerwerte verwertbar.

Der Zeitpunkt, der dem Erreichen der Streckgrenze des Vorformlings entspricht, ist in einer selbstoptimierenden Ausführung als Zieldefinition als ein bestimmter Zeitpunkt oder ein bestimmtes Zeitintervall ab dem Beginn der Vorblasphase oder der Einleitung des Blasfluids vorgebbar. Zur Umsetzung dieser Zieldefinition ist die Steuerungseinrichtung programmtechnisch dazu eingerichtet, das Erreichen der Streckgrenze durch die Auswertung des Ventilausgangsdrucks als Erfassung einer Druckspitze zu ermitteln und eine Steuerfolge für die Betätigung des Stellglieds zum Erreichen der Streckgrenze bis zum vorgegebenen Zeitpunkt oder Ablauf des vorgegebenen Zeitintervalls zu berechnen. In diesem Fall wird von der Steuerungsvorrichtung die Einleitung des Blasfluids bereits vor dem Erreichen der Streckgrenze anhand einer entsprechenden Steuerfolge (Stellgliedposition) für dieses Intervall der Vorblasphase geregelt. Die Berechnung dieser bis zum Erreichen der Streckgrenze anzuwendenden Steuerfolge benötigt mindestens einen ersten Einrichtungsdurchgang (ein erster Durchlauf des Blasprozesses mit einem konstanten Ventilhub), um die spezifische Streckgrenze des jeweils zu verarbeitenden Materials durch die Auswertung des Ventilausgangsdrucks bei einem wählbaren konstanten Ventilhub (Position des Stellglieds) als Erfassung einer Druckspitze zu ermitteln. Im laufenden Betrieb (nach der Ersteinrichtung) besitzt die Steuerungsvorrichtung in dieser Ausführung eine weitere Selbstoptimierungseigenschaft, da Abweichungen der physikalischen Eigenschaften der verarbeiteten Vorformlinge - beispielsweise ihrer Vortemperierung oder Qualität -, die eine zeitliche Verschiebung der Streckgrenze zur Folge haben, erkannt und korrigiert werden. Derartige Qualitätsabweichungen bestehen in der Praxis häufig etwa bei der Verwendung von Biokunststoffen.

Zur funktionalen Integration in am Anlagenort bestehende Feldbus- oder Industrial-Ethernet-Systeme, Anlageneinrichtungen und/oder eine speicherprogrammierbare Anlagensteuerung (SPS) ist die Steuerungseinrichtung mit mindestens einer, zu wenigstens einem industriellen Protokollstandard kompatiblen Datenkommunikationsschnittstelle ausgebildet. Über die Datenkommunikationsschnittstelle ist die Steuereinrichtung beispielsweise parametrierbar (Eingabe oder Änderung der Vorgabe-Parameter), ferner sind von der Steuerungseinrichtung erfasste und (zwischen-)gespeicherte Sensordaten, Berechnungsdaten oder andere Prozessdaten abrufbar. Schließlich kann die Steuerungsvorrichtung Steuerungssignale von einer speicherprogrammierbaren Anlagensteuerung (SPS) erhalten. Die genaue Ausgestaltung der Datenkommunikationsschnittstelle wird anhand der gewünschten Kompatibilität und des gewünschten Leistungsumfangs gewählt. Beispielsweise ist dies eine zu den Industriestandards Profibus, DeviceNet / ControlNet oder CANopen kompatible drahtgebundene Feldbus-Schnittstelle oder eine zu den Industriestandards Profinet, EtherNet/IP, Ethernet Powerlink oder EtherCat kompatible drahtgebundene Netzwerkschnittstelle (Industrial Ethernet). Eine solche Datenkommunikationsschnittstelle kann gleichzeitig zu mehreren Protokollstandards (Datenübertragungsprotokolle) kompatibel ausgestaltet sein (beispielsweise durch Verwendung eines Anybus-Moduls). Bei der Ausgestaltung als drahtgebundene Datenkommunikationsschnittstelle ist die Steuereinrichtung über diese mittelbar auch mit einem externen Zugangspunkt zur drahtlosen Datenkommunikation, etwa einem Industrial Wireless Access Point, verbindbar. Die Steuerungseinrichtung kann aber auch unmittelbar mit einer entsprechenden drahtlosen Datenkommunikationsschnittstelle, etwa einer Industrial WLAN-Schnittstelle (IWLAN), ausgebildet sein. Durch die Integration einer solchen Industrie-kompatiblen Datenkommunikationsschnittstelle kann die Steuerungsvorrichtung einfach in bestehende Anlageneinrichtungen und eine bestehende übergeordnete speicherprogrammierbare Anlagensteuerung (SPS) eingebunden werden und von dieser beispielsweise auch Signale erhalten.

Zur Integration der Steuereinrichtung in herkömmliche Netzwerk-Segmente ist diese - gegebenenfalls zusätzlich zu einer vorhandenen Industrie-kompatiblen Datenkommunikationsschnittstelle - vorzugsweise mit mindestens einer Standard-Netzwerkschnittstelle ausgebildet. Hierdurch ist die einfache und von der Gestaltung der externen Netzwerk-Infrastruktur unabhängige direkte Integration der Steuervorrichtung in vorhandene Standard-Netzwerk-Segmente - beispielsweise das Büronetzwerk eines Unternehmens ("Office-Ethernet") oder das Internet - gewährleistet. Zwar können bereits auf der industriellen Steuerungs- oder Fertigungsebene (auch als "Feldebene" bezeichnet) verbundene (Feldbus) oder vernetzte (Industrial Ethernet) Geräte je nach verwendeter Datenübertragungstechnik entweder über spezielle Infrastrukturkomponenten (z.B. Gateways) oder bei hinreichender Kompatibilität auch direkt mit Standard-Netzwerk-Segmenten verbindbar oder in diese integrierbar sein. Ferner existieren umgekehrt auch technische Lösungen zur Einbindung von Standard-Ethernet-Komponenten, wie beispielsweise einem herkömmlichen PC in Feldbus- oder Industrial Ethernet-Umgebungen. Auch bei einer theoretisch möglichen direkten Verbindbarkeit wird hierbei ein Mischbetrieb von Standardkomponenten ("Standard Ethernet") und Geräten der Feldebene (Industrial Ethernet) innerhalb eines gemeinsamen Netzwerk-Segments jedoch in der Regel vermieden, um auf der Feldebene uneingeschränkt eine hinreichende Industrietauglichkeit der angeschlossenen Komponenten beispielsweise in Hinblick auf die erforderliche Echtzeitfähigkeit und Ausfallsicherheit gewährleisten zu können. Indem die Steuereinrichtung mit mindestens einer Standard-Netzwerkschnittstelle ausgebildet ist, ist eine direkte Integration der Steuervorrichtung in herkömmliche Netzwerk-Segmente unabhängig von der bestehenden externen Netzwerk-Infrastruktur und den verfügbaren Infrastrukturkomponenten jederzeit gewährleistet. Über die Standard-Netzwerkschnittstelle ist die Steuereinrichtung beispielsweise parametrierbar (Eingabe oder Änderung der Vorgabe-Parameter), ferner sind von der Steuerungseinrichtung erfasste und (zwischen-)gespeicherte Sensordaten, Berechnungsdaten oder andere Prozessdaten abrufbar. Ist die Steuereinrichtung gleichzeitig auch mit einer Industrie-kompatiblen Datenkommunikationsschnittstelle ausgebildet, erfolgt bereits auf der Ebene der Steuereinrichtung eine Trennung von Standard-Ethernet und Feldebene. Die Standard-Netzwerkschnittstelle kann drahtgebunden (Ethernet) oder drahtlos (WLAN) ausgestaltet sein. Bei der Ausgestaltung als drahtgebundene Netzwerkschnittstelle ist die Steuerungseinrichtung über diese mittelbar auch mit einem externen Zugangspunkt für drahtlose Datenkommunikation, etwa einem Wireless Access Point, verbindbar.

Eine erleichterte Parametrierung der Vorrichtung oder ein erleichterter Abruf von in der Vorrichtung erfassten und gespeicherten Daten wird erreicht, indem die Steuerungseinrichtung programmtechnisch eingerichtet ist mit einem Serverdienst und einer Benutzerschnittstelle zur Eingabe von Parametrierungsangaben und/oder zur Anzeige oder zur Ausgabe erfasster Sensordaten und/oder Berechnungsdaten über eine vorhandene Datenkommunikationsschnittstelle oder eine Standard-Netzwerkschnittstelle. Dies ist beispielsweise ein Webserverdienst zur Ferneingabe von Parametrierungsdaten und/oder zur Fernzeige oder zum Fernabruf von in der Vorrichtung gespeicherten Daten. Hierdurch ist auch die einfache Eingabe neuer Parametrierungsdaten durch den Bediener im laufenden Betrieb ("on the fly") ermöglicht. Ferner ermöglicht dies ein Prozessmonitoring im laufenden Betrieb durch den Bediener durch den Abruf von Sensor- und Berechnungsdaten.

In der vorstehenden Ausführung wird ein erweitertes Prozessmonitoring ermöglicht, indem der Serverdienst mit mindestens einer Auswertungs- und/oder Analyseeinheit zur Generierung von Auswertungs- und/oder Analyseergebnissen und zur Anzeige oder Ausgabe der Auswertungs- und/oder Analyseergebnisse über eine vorhandene Datenkommunikationsschnittstelle oder eine Standard-Netzwerkschnittstelle ausgebildet ist. Hierdurch werden durch den Serverdienst im laufenden Betrieb beispielsweise aufbereitete Messkurven generiert und zur Anzeige oder zum Abruf durch den Bediener bereitgestellt. Ferner können hierbei von der Steuerungseinrichtung Warn- oder Alarmsignale an den Bediener oder eine übergeordnete Anlagensteuerung ausgegeben werden, indem mit der Parametrierung der Steuerungseinrichtung Schwellenwerte für erfassbare Prozessparameter (Erreichen eines Maximal- oder Minimaldruckwerts an Ventileingang oder Ventilausgang, Scheitern der Berechnung eines Steuerwerts aufgrund vorgegebener Werte für Druck, Behältervolumen und Zeitraum) vorgegeben sind.

Indem sämtliche Komponenten der Vorrichtung als eine gemeinsame Baueinheit ausgeführt sind, wird eine besonders vorteilhafte, kompakte Bauform erreicht, die eine besonders flexible Einbindung in Anlagen zur Blasformung ermöglicht. Aufgrund der kompakten und integrierten Ausführung ist auf einfache Weise auch eine Nachrüstung bestehender Anlagen durch den Austausch der vorhandenen Ventileinheit mit der Steuerungsvorrichtung ermöglicht, wodurch ältere Anlagen einfach mit einer entsprechend performanten Steuerungsplattform und aktuellen Aus- und Eingabeschnittstellen nachgerüstet werden können.

Einen weiteren Kern der Erfindung bildet ein Verfahren zur Steuerung des Blasfluiddurchflusses beim Blasformen von Behältern aus Vorformlingen mit einem Proportionalventil mit einem veränderbaren Durchflussquerschnitt, einem Stellglied zur Betätigung des Proportionalventils, einem Mittel zur Erfassung der Position des Stellglieds und Sensormitteln zur Erfassung des Ventileingangs- und Ventilausgangsdrucks, bei welchem ein Zeitpunkt zur Erreichung der Streckgrenze für den Vorformling, ein Behältervolumen und eine Zeitraum zur Erreichung des Behältervolumens vorgebbar sind und mittels einer digitalen Steuerung während der Vorblasphase ab dem Erreichen der Streckgrenze zur Laufzeit automatisiert zyklisch eine Berechnung von Steuerwerten für die Betätigung des Stellglieds zum Erreichen des vorgegebenen Behältervolumens innerhalb des vorgegebenen Zeitraums erfolgt und das Stellglied entsprechend der berechneten Steuerwerte betätigt wird, wobei in jedem Berechnungszyklus die Berechnung des jeweils nächsten Steuerwerts unter Berücksichtigung des bis zum jeweiligen Berechnungszyklus erreichten, anhand der bisherigen Stellgliedpositionen und des bisherigen Druckverlaufs berechneten Behältervolumens erfolgt.

In einer praktisch einfach umsetzbaren Ausgestaltung des Verfahrens erfolgt die Berechnung der Steuerwerte in jedem Berechnungszyklus mit der funktionalen Maßgabe eines möglichst gleichmäßigen Behälterwachstums bis zum Erreichen des vorgegebenen Behältervolumens innerhalb des vorgegebenen Zeitraums. Das technische Steuerungsmodell der digitalen Steuerung beinhaltet hierzu eine entsprechende qualitative Gütevorgabe, nach welcher die Berechnung des jeweils nächsten Steuerwerts in jedem Berechnungszyklus mit der Maßgabe eines möglichst gleichmäßigen Behälterwachstums bis zum Erreichen des vorgegebenen Behältervolumens innerhalb des vorgegebenen Zeitraums erfolgt.

Ein größerer manueller Gestaltungsspielraum zur Beeinflussung des Behälterwachstums wird geschaffen, indem zusätzlich mindestens ein Behälterzwischenvolumen und jeweils ein Zwischenzeitraum zur Erreichung des Behälterzwischenvolumens vorgebbar sind, wobei die Berechnung der Steuerwerte in jedem Berechnungszyklus unter Berücksichtigung sämtlicher vorgegebenen Behälterzwischenvolumen und Zwischenzeiträume erfolgt. Der Bediener kann so Einfluss auf das zur Laufzeit des Steuerungsverfahrens per Echtzeitberechnung gesteuerte Behälterwachstum nehmen und dieses durch Vorgabe ein oder mehrerer Zwischenvolumina modellieren. Die Berücksichtigung der vom Bediener zusätzlich vorgegebenen Behälterzwischenvolumen und Zwischenzeiträume können im technischen Steuerungsmodell der digitalen Steuerung beispielsweise durch eine Interpolationsfunktion berücksichtigt sein, bei der die zeitlich vorgegebenen Zwischenvolumina als Stützpunkte zur Berechnung des ebenfalls zeitlich vorgegebenen zur erreichenden Behälterendvolumens zu Grunde gelegt sind. Hierbei ist grundsätzlich die Vorgabe beliebig vieler Behälterzwischenvolumina und Zwischenzeiträume berücksichtigungsfähig, deren maximale Anzahl lediglich durch die technische Auflösung der beteiligten Sensormittel, der Latenz der Betätigung des Stellglieds und der Ausführungsgeschwindigkeit der Steuerungseinrichtung begrenzt ist. Je mehr Behälterzwischenvolumina und Zwischenzeiträume vorgegeben sind, desto höher ist der Modellierungsgrad der Gestaltung des Behälterwachstums.

In einer einfachen Ausführung ist der Zeitpunkt, der dem Erreichen der Streckgrenze des Vorformlings entspricht, als spezifischer Druckwert vorgebbar. Hierdurch ist der Zeitpunkt des Erreichens der Streckgrenze durch die Auswertung des Ventilausgangsdrucks im Verfahren erfassbar und als Startzeitpunkt für die Berechnung der Steuerwerte verwertbar.

In einer selbstoptimierenden Ausführung des Verfahrens ist der Zeitpunkt, der dem Erreichen der Streckgrenze des Vorformlings entspricht, als Zieldefinition als ein bestimmter Zeitpunkt oder ein bestimmtes Zeitintervall ab dem Beginn der Vorblasphase oder der Einleitung des Blasfluids vorgebbar. Das Erreichen der Streckgrenze wird von der digitalen Steuerung mittels Auswertung des Ventilausgangsdrucks als Erfassung einer Druckspitze ermittelt und eine Steuerfolge für die Betätigung des Stellglieds zum Erreichen der Streckgrenze bis zum vorgegebenen Zeitpunkt oder Ablauf des vorgegebenen Zeitintervalls berechnet. In diesem Fall umfasst das Verfahren bereits die Regelung des Blasfluiddurchflusses vor dem Erreichen der Streckgrenze anhand einer entsprechenden Steuerfolge (Stellgliedposition) für dieses Intervall der Vorblasphase. Die Berechnung der bis zum Erreichen der Streckgrenze anzuwendenden Steuerfolge benötigt mindestens einen ersten Einrichtungsdurchgang (ein erster Durchlauf des Blasprozesses mit einem konstanten Ventilhub), um die spezifische Streckgrenze des jeweils zu verarbeitenden Materials durch die Auswertung des Ventilausgangsdrucks bei einem wählbaren konstanten Ventilhub (Position des Stellglieds) als Erfassung einer Druckspitze zu ermitteln. Im laufenden Betrieb (nach der Ersteinrichtung) beinhaltet das Steuerungsverfahren in dieser Ausführung eine weitere Selbstoptimierungseigenschaft, da Abweichungen der physikalischen Eigenschaften der verarbeiteten Vorformlinge - beispielsweise ihrer Vortemperierung oder Qualität -, die eine zeitliche Verschiebung der Streckgrenze zur Folge haben, erkannt und korrigiert werden.

Weitere Vorteile der Erfindung sind nachstehend gemeinsam mit der Beschreibung bevorzugter Ausführungsbeispiele der Erfindung anhand der Figuren näher dargestellt. Es zeigen:

Fig. 1     eine perspektivische Darstellung einer Vorrichtung zur Steuerung des Blasluftdurchflusses beim Blasformen von Behältern aus Vorformlingen,

Fig. 2     eine schematische Darstellung von Komponenten der Steuerungsvorrichtung gemäß Fig. 1,

Fig. 3     ein Diagramm zur Veranschaulichung des im Vorformling bewirkten Volumenwachstums während des zeitlichen Verlaufs eines Streckblasprozesses,

Fig. 4     ein schematisches Blockschaltbild einer digitalen Steuerung mit Eingangs- und Ausgangsgrößen.

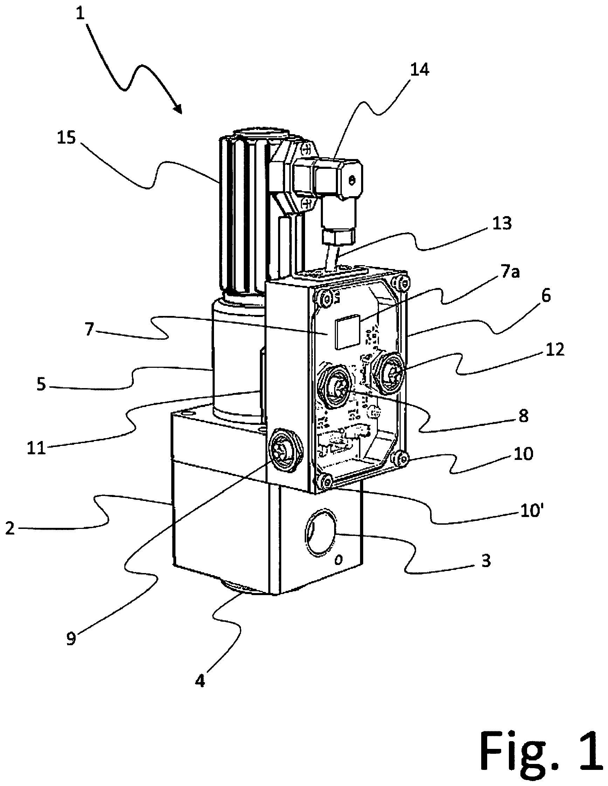

Fig. 1 zeigt die Steuerungsvorrichtung 1 mit dem Proportionalventil 2, das ein 2/2-Wegeventil ist und einen Drucklufteingang 3 und einen Druckluftausgang 4 aufweist. Die Betätigung des Proportionalventils 2 erfolgt durch den elektrisch ansteuerbaren Proportionalmagneten 5, der als Stellglied für die Betätigung des Proportionalventils 2 dient. Die Steuerung des Proportionalmagneten 5 erfolgt mittels der digitalen Steuerungseinrichtung 6, welche aus einem in einem Gehäuse montierten programmierbaren Einplatinencomputer ("single-board computer (SBC)") besteht, bei dem sämtliche zum Betrieb nötigen elektronischen Komponenten (CPU, Speicher, Ein- und Ausgabeschnittstellen, D/A-Wandler, DMA-Controller, usw.) auf einer einzigen Leiterplatte 7 zusammengefasst sind. Die Leiterplatte 7 mit diversen elektronischen Bauteilen und der CPU 7a ist in Fig. 1 durch die transparent dargestellte vordere Abdeckung des Gehäuses der Steuerungseinrichtung 6 hindurch teilweise erkennbar. Die Leiterplatte 7 ist mit einer als M12-Steckverbindungsbuchse aus dem Gehäuse der Steuerungseinrichtung 6 herausgeführten Datenkommunikationsschnittstelle 8 zur Verbindung mit einem Feldbus- oder Industrial Ethernet-System ausgebildet. Die Datenkommunikationsschnittstelle 8 ist je nach Bedarf beispielsweise als Feldbus-Schnittstelle (beispielsweise kompatibel zu Profibus, DeviceNet / ControlNet oder CANopen) oder als Industrial Ethernet-Schnittstelle (beispielsweise kompatibel zu Profinet, EtherNet/IP, Ethernet Powerlink oder EtherCat) ausgestaltet. Sie kann gleichzeitig zu mehreren Protokollstandards kompatibel ausgestaltet sein. Über die Datenkommunikationsschnittstelle 8 ist die Steuerungseinrichtung 6 in am Anlagenort bestehende Feldbus- oder Industrial-Ethernet-Systeme, Anlageneinrichtungen und/oder eine speicherprogrammierbare Anlagensteuerung (SPS) integrierbar. Über die Datenkommunikationsschnittstelle 8 ist die Steuerungseinrichtung 6 ferner auch mit einem externen Zugangspunkt zur drahtlosen Datenkommunikation, etwa einem Industrial Wireless Access Point, verbindbar. Daneben ist die Leiterplatte 7 mit einer ebenfalls als M12-Steckverbindungsbuchse aus dem Gehäuse der Steuerungseinrichtung 6 herausgeführten Netzwerkschnittstelle 9 ausgebildet, die eine Standard-Ethernet-Schnittstelle ist. Über die Netzwerkschnittstelle 9 ist die Steuereinrichtung 6 beispielsweise mit einem Büronetzwerk oder dem Internet verbindbar. Über die Netzwerkschnittstelle 9 ist die Steuerungseinrichtung 6 ferner auch mit einem mit einem externen Zugangspunkt für drahtlose Datenkommunikation, etwa einem Wireless Access Point, verbindbar. Das Gehäuse der Steuereinrichtung 6 ist mit den Schrauben 10 und 10' am Gehäuse des Proportionalventils 2 verschraubt. Die Leiterplatte 7 der Steuerungseinrichtung 6 ist intern über Signalleitungen 24, 24' (in Fig. 1 perspektivisch bedingt nicht sichtbar) mit in das Proportionalventil 2 integrierten Sensormitteln 23, 23' (in Fig. 1 ebenfalls darstellungsbedingt bedingt nicht sichtbar) zur Erfassung des Ventileingangs- und Ventilausgangsdrucks verbunden, die über den Anschlusssockel 11 aus dem Gehäuse des Proportionalventils 2 herausgeführt sind. Die Steuereinrichtung 6 erhält ihre Stromversorgung über den ebenfalls als M12-Steckverbindungsbuchse aus dem Gehäuse der Steuerungseinrichtung 6 herausgeführten Stromanschluss 12. Ferner ist die Steuerungseinrichtung 6 über die kombinierte und entsprechend mehradrig ausgebildete Steuer-/Signalleitung 13 und den Steuer-/Signalanschluss 14 mit dem Proportionalmagnet 5 und dem Hallsensor 15 verbunden. Der Proportionalmagnet 5 ist über den Steuer-/Signalanschluss 14 elektrisch per Stromstärke steuerbar. Der Steuer-/Signalanschluss 14 umfasst gleichzeitig einen Signalanschluss, über den die Steuerungseinrichtung 6 Signale des auf den Proportionalmagnet 5 aufgesetzten Hallsensors 15 erhält. Sämtliche Komponenten der Steuerungsvorrichtung 1 sind als gemeinsame Baueinheit ausgeführt, die eine kompakte Bauform besitzt. Zur weiteren Erhöhung der Kompaktheit kann die Steuereinrichtung 6 in einer abgewandelten Bauweise in das Gehäuse des Proportionalventils 2 integriert oder können sämtliche in Fig. 1 dargestellten Komponenten der Steuerungsvorrichtung 1 in einem gemeinsamen Gehäuse ausgeführt sein. Die kompakte Bauform ermöglicht eine einfache Integration in Blasstationen von Blasanlagen. Da hierbei erfindungsgemäß jede Blasstation mit einer eigenen Steuerungseinrichtung ausgerüstet ist, können innerhalb derselben Blasformanlage einzelne Blasstationen unterschiedlich bestückt und in diesen zueinander unterschiedliche Behälterformen hergestellt und/oder unterschiedliche Materialmischungen verarbeitet werden. Aufgrund der kompakten und integrierten Ausführung ist auf einfache Weise auch eine Nachrüstung bestehender Blasformanlagen durch den Austausch der vorhandenen Ventileinheiten mit der Steuerungsvorrichtungen nach Bauart der Steuerungsvorrichtung 1 ermöglicht, wodurch ältere Anlagen mit einer entsprechend performanten Steuerungsplattform und aktuellen Aus- und Eingabeschnittstellen nachgerüstet werden können. Anstatt der unmittelbaren Anordnung der Drucksensoren 23, 23' innerhalb des Proportionalventils 2 kann der Ventileingangs- und Ventilausgangsdruck in einer abgewandelten Bauweise auch durch die Verbindung mit externen, innerhalb der weiteren Blasformanlage bereits vorhandenen Sensoren erfasst werden, die etwa innerhalb einer Druckluftversorgungsleitung zum Ventileingang 3 und einer Druckluftverbindungsleitung zur Blasform nach dem Ventilausgang 4 angeordnet sind.

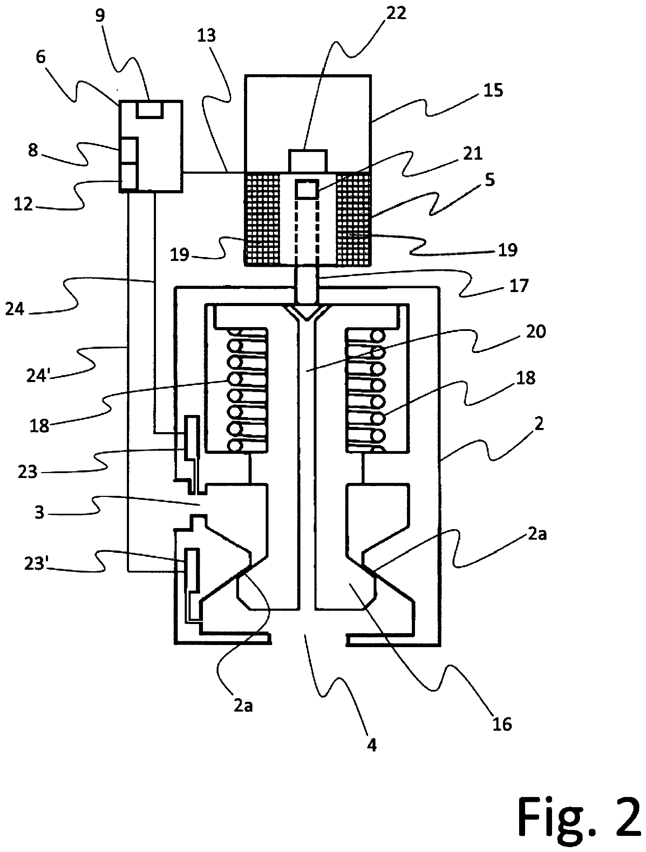

Fig. 2 zeigt eine einfache schematische Darstellung von Komponenten der Steuerungsvorrichtung 1. Im Proportionalventil 2 ist ein kegelförmig endender Ventilstößel 16 linierbeweglich angeordnet. Der Ventilstößel 16 ist durch den als Stellglied dienenden stiftförmigen Anker 17 entgegen der Kraft der Feder 18 nach unten bewegbar, wobei der Druckmitteleingang 3 mit dem Druckmittelausgang 4 verbunden wird. Der sich in Öffnungsstellung am kegelförmigen Ende des Ventilstößels 16 gegenüber der Grenzfläche 2a des Ventilkörpers des Proportionalventils 2 ergebende Durchflussquerschnitt ist kontinuierlich veränderbar und von der Linearstellung des Ankers 17 abhängig. Dieser ist ebenfalls linearbeweglich innerhalb einer ihn umgebenden Spulenwicklung 19 im Gehäuse des Proportionalmagneten 5 gelagert. Die lineare Position (Stellung) des Ankers 17 innerhalb der Spulenwicklung 19 ist abhängig von der durch die Steuereinrichtung 6 über die kombinierte Steuer-/Signalleitung 13 gesteuerte, an der Spulenwicklung 19 jeweils anliegenden Stromstärke. Der Anker 17 ist durch Erhöhung der Stromstärke kontinuierlich nach unten bewegbar, wobei er den Ventilstößel 16 entgegen der Kraft der Feder 18 nach unten drückt. Der Ventilstößel 16 ist in Öffnungsstellung durch den zentralen Ausgleichskanal 20 druckausgeglichen. Auf den Proportionalmagnet 5 ist der Hallsensor 15 aufgesetzt, durch den die jeweilige Position des Ankers 17 erfassbar ist. Hierzu ist der Anker 17 an seinem oberen Ende mit dem Permanentmagnetmittel 21 und der Hallsensor 15 mit dem Sensormittel 22 ausgebildet, welches den relativen Abstand des Permanentmagnetmittels 21 zu sich selbst berührungslos erfasst. Ein die jeweilige Position des Ankers 17 repräsentierendes Signal wird vom Hallsensor 15 über die die kombinierte Steuer-/Signalleitung 13 an die Steuereinrichtung 6 übermittelt. Im Proportionalventil 2 sind ferner Drucksensoren 23 und 23' als Sensormittel zur Erfassung des Ventileingangsdrucks (durch den Drucksensor 23) und des Ventilausgangsdrucks (Drucksensor 23') angeordnet und über die Signalleitungen 24 und 24' mit der Steuereinrichtung 6 verbunden.

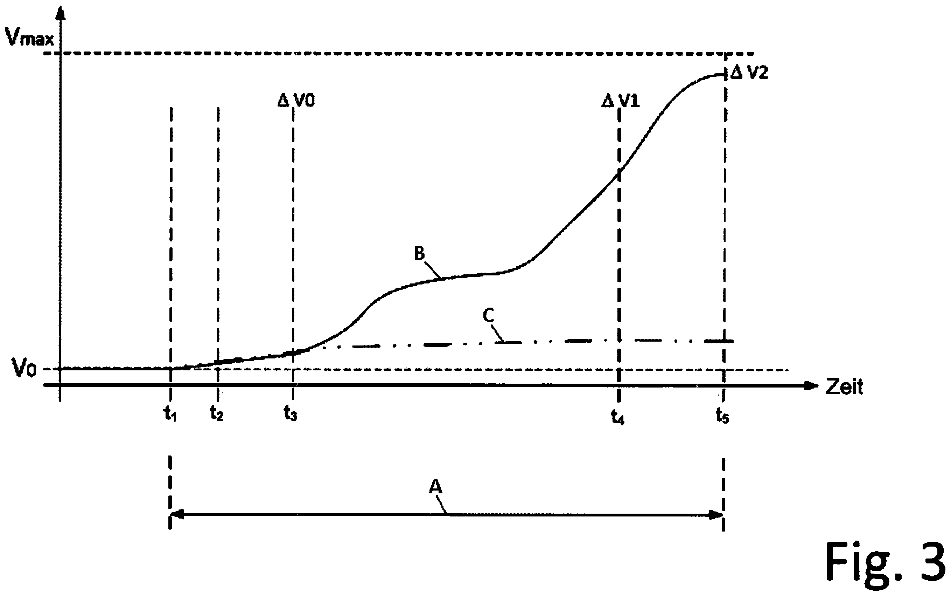

Fig. 3 zeigt die Behälterexpansion eines Vorformlings während eines beispielhaften zeitlichen Ablaufs eines Streckblasprozesses (Herstellung eines Behälters) als Volumen/Zeit-Diagramm, wobei die Abzissenachse den Zeitverlauf und die Ordinatenachse das Volumenwachstum repräsentieren. Zum Zeitpunkt $t_1$ (zudem der Vorformling das Ausgangsvolumen $V_0$ besitzt) beginnt zunächst der Reckvorgang mit dem linearen Ausfahren der Reckstange in der Blasform. Der Vorformling wird in Längsrichtung gestreckt. Zum Zeitpunkt $t_2$ (zu welchem der Vorformling gegenüber dem Ausgangsvolumen $V_0$ ein lediglich geringes, allein durch Längsverstreckung bewirktes Volumenwachstum besitzt) beginnt die Einleitung der Blasluft über das Proportionalventil 2. Dies kann beispielsweise durch ein entsprechendes Steuersignal einer übergeordneten Anlagensteuerung (SPS) über die Datenkommunikationsschnittstelle 8 der Steuerungsvorrichtung 1 ausgelöst werden. Zum Zeitpunkt $t_3$ ist die Streckgrenze des Vorformlings erreicht. Der Behälter besitzt in diesem Zeitpunkt das Volumen $\Delta V0$, dass das Ausgangsvolumen für den Steuerungsprozess während der Vorblasphase darstellt. Das bis dahin aufgrund der Einleitung der Blasluft seit dem Zeitpunkt $t_2$ bewirkte Behälterwachstum ist anhand des mit den Drucksensoren 21 und 21' erfassten bisherigen Druckverlaufs, den mit dem Hallsensor 15 erfassten Stellgliedpositionen des Proportionalmagneten 5 (und damit dem Verlauf der Größe des Öffnungsquerschnitts des Proportionalventils 2) berechenbar. Zum Zeitpunkt $t_4$ ist das Ende des Reckvorgangs erreicht, die Reckstange ist voll ausgefahren. Der Behälter besitzt zu diesem Zeitpunkt das infolge der Behälterexpansion nach dem Überschreiten der Streckgrenze durch die weitere Einleitung des Blasluft bereits stark erhöhte Volumen $\Delta V1$. Das bis dahin aufgrund der Einleitung der Blasluft bewirkte Behälterwachstum ist anhand der bisherigen von den Sensoren erfassten Daten berechenbar. Zum Zeitpunkt $t_5$ ist das Ende der Vorblasphase des Streckblasprozesses erreicht, zu dem die Expansion der Behälterblase das für die Vorblasphase definierte Endvolumen $\Delta V2$ erreicht hat. Nach dem Erreichen des Zeitpunkts $t_5$ endet die Vorblasphase und es beginnt die Fertigblasphase (auch als Hauptblasphase bezeichnet), in der der Behälter unter einem stark erhöhten Druckniveau ein seine gewünschte Endform und das endgültige Endvolumen $V_{max}$ gebracht wird. Der Zeitraum A kennzeichnet mithin die Erstreckung der Vorblasphase während des Streckblasprozesses, der in der Praxis etwa 200 ms beträgt. Die Verlaufskurve B symbolisiert die Volumenänderung des Vorformlings und damit gleichzeitig das Wachstum der Behälterblase bis zum Zeitpunkt $t_5$. Die Kurve C symbolisiert das allein durch die Längsverstreckung des Vorformlings mit dem Ausfahren der Reckstange bewirkte Volumenwachstum. Das Diagramm Fig. 3 zeigt mithin, dass das wesentliche Volumenwachstum der Behälterblase durch die Einleitung der Blasluft in der Vorblasphase bewirkt wird. Sowohl die nur durch das Ausfahren der Reckstange gemäß der Kurve C, als auch die in der Fertigblasphase (entsprechend der Volumendifferenz $V_{max} - \Delta V2$) bewirkten geringfügigen Volumenänderungen können für die Steuerung in der Praxis daher vernachlässigt werden. Alternativ können diese Volumenänderungen im Steuermodell durch entsprechende absolute oder prozentuale Pauschalgrößen berücksichtigt werden oder, sofern einfach abschätzbar oder ermittelbar, als zusätzliche Parameter vorgebbar sein.

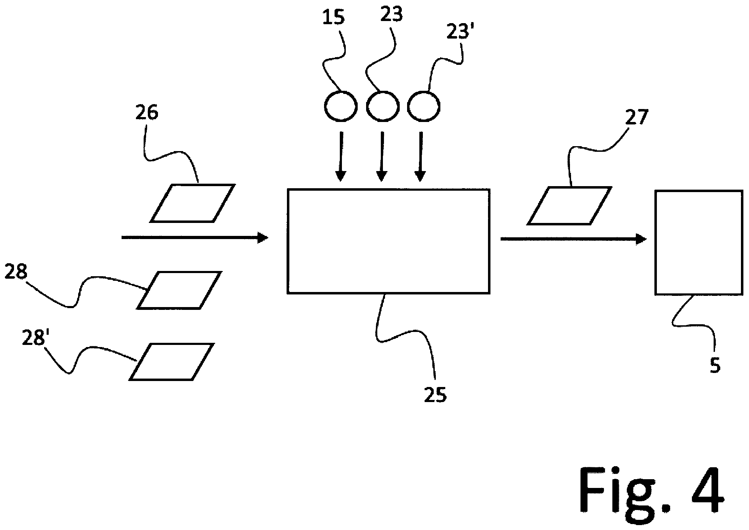

Fig. 4 zeigt ein vereinfachtes schematisches Blockschaltbild von Ausführungsformen der der erfindungsgemäßen digitalen Steuerung 25 mit Eingangs- und Ausgangsgrößen. Als globale Vorgabegröße 26 für die Steuerung 25 dient die Vorgabe des gewünschten Behälterendvolumens $V_{max}$ zum Zeitpunkt $t_{max}$, der dem Ende des Steuerungsvorgangs entspricht. In einer einfachen Ausgestaltung der Steuerung entspricht dies der Vorgabe des Volumens $V_{max}$ für den Zeitpunkt $t_5$ (dem Ende des Steuerzeitraums für die Vorblasphase) entsprechend der Darstellung gemäß Fig. 3. In alternativen Ausgestaltungen können die in der Fertigblasphase bewirkte Volumendifferenz $V_{max} - \Delta V2$ und/oder die nur durch das Ausfahren der Reckstange gemäß der Kurve C in Fig. 3 bewirkte Volumenänderung im Steuermodell zusätzlich durch entsprechende absolute oder prozentuale Pauschalgrößen abzugsweise für die Steuerung bis zum Zeitpunkt $t_5$ berücksichtigt werden. Sofern abschätzbar oder durch Vorversuche ermittelbar, kann als Vorgabegröße 26 auch direkt das Volumen $\Delta V2$ - ggf. zusätzlich abzüglich der nur durch das Ausfahren der Reckstange bewirkten Volumenänderung - zum Zeitpunkt $t_5$ entsprechend der Darstellung gemäß Fig. 3 vorgebbar sein. Sofern das Proportionalventil auch für die Einleitung der Blasluft in der Fertigblasphase genutzt wird, kann die in der Fertigblasphase bewirkte Volumenänderung von $\Delta V2$ zu $V_{max}$ ferner in einem Einrichtungsdurchgang anhand der Sensorenwerte ermittelt und im Steuermodell automatisiert für das bis zum definierten Zeitpunkt $t_5$ zu erreichende Volumen $\Delta V2$ berücksichtigt werden. Anhand der Vorgabegröße 26 berechnet die Steuerung 25 automatisiert zyklisch die Stellgröße 27 als Steuerwert $x_{CMD_k}$ der als Ergebnis jedes einzelnen Berechnungszyklus jeweils ein diskreter Steuerwert (d.h. eine bestimmte Stromstärke) zur Betätigung des Proportionalmagneten 5 im nächsten Steuerzeitpunkt $t_k$ ist, wobei für $k=0..n$ gilt. Bei der Berechnung des Steuerwerts $x_{CMD_k}$ für den Steuerzeitpunkt $t_k$ wird nach dem techni-

schen Steuermodell der Steuerung 25 das bis zum aktuellen Berechnungszyklus jeweils bereits erreichte Behältervolumen $V_{k-1}$ berücksichtigt, das anhand der bis zum Zeitpunkt $k$ - 1 mit dem Hallsensor 15 erfassten bisherigen Stellgliedpositionen $\tilde{x}_{k-1}$ und den mit den Drucksensoren 23 und 23' erfassten Verläufen des Ventileingangsdrucks $\tilde{p}_{1_{k-1}}$ und des Ventilausgangsdrucks $\tilde{p}_{2_{k-1}}$ berechnet wird. Die von dem Hallsensor 15 und den Drucksensoren 23 und 23' erfassten Werte werden hierzu beispielsweise fortlaufend in DMA-Register innerhalb des Speichers der Steuereinrichtung 6 geschrieben und von der Steuereinrichtung 6 zumindest zur Laufzeit während des Zeitraums A fortlaufend zwischengespeichert.

Zur Berechnung der Stellgröße 27 als Steuerwert $x_{CMD_k}$ ist die digitale Steuerung 25 programmtechnisch mit Anweisungen eingerichtet, mit denen ein entsprechend geeignetes, technisches Steuerungsmodell abgebildet ist, das aus den allgemeinen Gesetzmäßigkeiten der Strömungsmechanik mit den bekannten Zusammenhängen zwischen den Größen Volumenstrom

$$Q = \dot{V} = \frac{dV}{dt}$$

und dem Massenstrom $\dot{m}$

$$q_m = \dot{m} = \frac{dm}{dt},$$

für Fluide berechenbar durch

$$\dot{m} = \varrho \cdot \dot{V} = \varrho \cdot c \cdot A$$

mit

    $\varrho$ Dichte des Mediums
    $c$ mittlere Strömungsgeschwindigkeit
    **$A$ Querschnittsfläche**
    **$\dot{V}$ Volumenstrom**.

abgeleitet ist. Die durch den Ventilausgangsdruck $p_2$ erzeugte Druckkraft $F_p$ innerhalb des Vorformlings mit der Innenwandoberfläche $A_0$ wirkt mit

$$F_p = p_2 \cdot A_O$$

auf die Behälter-Innenoberfläche ein. Die hieraus resultierende Volumenänderung $\dot{V}$ wird beispielsweise bei der Verwendung eines Blasgases auf Grundlage der allgemeinen Gasgleichung idealer Gase berechnet durch

$$\dot{V} = \dot{m} \cdot \frac{R \cdot \vartheta}{p_{2_A}} - V \cdot \frac{\dot{p}_2}{p_{2_A}}$$

wobei $R$ die allgemeine Gaskonstante und $\vartheta$ die als zeitlich konstant angesehene Gastemperatur sind. Auf der Basis des aus den vorstehend aufgeführten bekannten Grundlagen abgeleiteten technischen Steuermodells erfolgt die Berechnung des jeweils nächsten Steuerwerts 27 für die Betätigung des Stellglieds zum Erreichen des vorgegebenen Behältervolumens innerhalb des hierfür vorgegebenen Zeitraums jeweils als automatisiert sukzessiv berechnete Steuerwertfolge, wobei in jedem Berechnungszyklus das bisher bereits erreichte Behältervolumen berücksichtigt wird. Der jeweils nächste Steuerwert $x_{CMD_k}$ wird hierzu in jedem Berechnungszyklus ausgehend vom vorgegebenen Behälterendvolumen $V_{max}$ zum Zeitpunkt $t_{max}$ auf den nächsten Steuerzeitpunkt $t_k$ zurückgerechnet, wobei das bis zum jeweiligen Berechnungszyklus bereits erreichte, anhand der erfassten Sensordaten berechnete Behältervolumen $V_{k-1}$ berücksichtigt wird. Der für den jeweiligen Steuerzeitpunkt $t_k$ berechnete Steuerwert $x_{CMD_k}$ entspricht mithin dem zur Erreichung des zu diesem Zeitpunkt verbleibenden Restvolumens $V_{max}$-$V_{k-1}$ im verbleibenden Zeitraum $t_{max}$ - $t_k$ unter den gegebenen Druckverhältnissen jeweils erforderlichen Durchflussquerschnitt des Proportionalventils 2. Hierbei werden erforderliche Randparameter wie die spezifische Dichte des jeweils verwendeten Blasfluids, der Isentropenexponent eines verwendeten Blasgases, der ventilspezifische, druckabhängige Strömungsgeschwindigkeitskennwert des verwendeten Proportionalventils und die in Abhängigkeit von der Position des Stellglieds veränderliche spezifische Querschnittsfläche des verwendeten Proportionalventils berücksichtigt. Die nur durch das Ausfahren der Reckstange und in der Fertigblasphase bewirkten geringfügigen Volumenänderungen können, wie im Zusammenhang mit Fig. 3 gezeigt, für die Steuerung in der Praxis vernachlässigt werden. Ferner können in der Praxis nur in einem geringen Maße veränderliche Größen und Parameter, wie bspw. die Temperatur des Blasfluids, vereinfacht als Konstante berücksichtigt werden, da etwaige qualitativ erhebliche Veränderungen solcher Randparameter aufgrund der dem erfindungsgemäßen Verfahren immanenten fortlaufenden Selbstkorrektur (aufgrund der Berücksichtigung des in jedem Berechnungszyklus erreichten Behältervolumens) indirekt berücksichtigt sind.

In einer einfachen Ausführung der Steuerung 25 ist lediglich die Vorgabegröße 26, entsprechend des gewünschten Behälterendvolumens $V_{max}$ zum Zeitpunkt $t_{max}$ vorgegeben. Die Rückberechnung der Stellgröße 27 als Steuerwert $x_{CMD_k}$ zum Steuerzeitpunkt $t_k$ erfolgt hierbei jeweils anhand einer entsprechenden qualitativen Gütevorgabe im technischen Steuerungsmodell, mit welcher die Berechnung des Steuerwerts $x_{CMD_k}$ in jedem Berechnungszyklus mit der Maßgabe eines insgesamt möglichst gleichmäßigen Behälterwachstums bis zum Erreichen des vorgegebenen Behälterendvolumens $V_{max}$ im Zeitpunkt $t_{max}$ berechnet wird.

In einer alternativen Ausführung der Steuerung 25 sind zusätzlich die Vorgabegrößen 28 und 28' vorgegeben, die dem Erreichen des Behälterzwischenvolumens $\Delta V0$ zum Zeitpunkt $t_3$ (Vorgabegröße 28) und dem Erreichen des Behälterzwischenvolumens $\Delta V1$ zum Zeitpunkt $t_4$ (Vorgabegröße 28') gemäß dem Diagramm Fig. 3 entsprechen. Die Rückberechnung der Stellgröße 27 als Steuerwert $x_{CMD_k}$ zum Steuerzeitpunkt $t_k$ erfolgt hierbei jeweils durch eine Interpolation, bei der die zeitlich vorgegebenen Zwischenvolumina 28 und 28' als Stützpunkte zur Berechnung des Behälterendvolumens $V_{max}$ zum Zeitpunkt $t_{max}$ zu Grunde gelegt sind.

**Bezugszeichenliste**

| | |
|---|---|
| 1 | Steuerungsvorrichtung |
| 2 | Proportionalventil |
| 2a | Grenzfläche |
| 3 | Drucklufteingang |
| 4 | Druckluftausgang |
| 5 | Proportionalmagnet |
| 6 | Steuerungseinrichtung |
| 7 | Leiterplatte |
| 7a | CPU |
| 8 | Datenkommunikationsschnittstelle |
| 9 | Netzwerkschnittstelle |
| 10, 10' | Schraube |
| 11 | Anschlusssockel |
| 12 | Stromanschluss |
| 13 | Steuer-/Signalleitung |
| 14 | Steuer-/Signalanschluss |
| 15 | Hallsensor |
| 16 | Ventilstößel |
| 17 | Anker |
| 18 | Feder |
| 19 | Spulenwicklung |
| 20 | Ausgleichskanal |
| 21 | Permanentmagnetmittel |
| 22 | Sensormittel |
| 23, 23' | Drucksensor |
| 24, 24' | Signalleitung |
| 25 | Steuerung |
| 26, 28, 28' | Vorgabegröße |

**Patentansprüche**

1. Vorrichtung zur Steuerung (1) des Blasfluiddurchflusses beim Blasformen von Behältern aus Vorformlingen, umfassend ein Proportionalventil (2) mit einem veränderbaren Durchflussquerschnitt, ein Stellglied (5) zur Betätigung des Proportionalventils, ein Mittel (15) zur Erfassung der Position des Stellglieds (5), Sensormittel (23, 23') zur Erfassung des Ventileingangs- und Ventilausgangsdrucks und eine digitale Steuerungseinrichtung (6), **dadurch gekennzeichnet, dass** die Steuerungseinrichtung (1) programmtechnisch dazu eingerichtet ist, während der Vorblasphase ab dem Erreichen eines vorgebbaren Zeitpunkts ($t_3$), der dem Erreichen der Streckgrenze des Vorformlings entspricht, zur Laufzeit automatisiert zyklisch Steuerwerte für die Betätigung des Stellglieds zum Erreichen eines vorgegebenen Behältervolumens innerhalb eines vorgegebenen Zeitraums zu berechnen, wobei in jedem Berechnungszyklus die Berechnung des jeweils nächsten Steuerwerts unter Berücksichtigung des bis zum jeweiligen Berechnungszyklus erreichten, anhand der bisherigen Stellgliedpositionen und des bisherigen Druckverlaufs berechenbaren Behältervolumens erfolgt.

2. Vorrichtung nach Anspruch 1, **dadurch gekennzeichnet, dass** das Erreichen der Streckgrenze als Druckwert vorgebbar ist.

3. Vorrichtung nach Anspruch 1, **dadurch gekennzeichnet, dass** das Erreichen der Streckgrenze als Zeitpunkt ($t_3$) oder als Zeitintervall ab dem Beginn der Vorblasphase oder der Einleitung des Blasfluids vorgebbar ist und die Steuerungseinrichtung (1) programmtechnisch dazu eingerichtet ist, das Erreichen Streckgrenze durch die Auswertung des Ventilausgangsdrucks als Erfassung einer Druckspitze zu ermitteln und eine Steuerfolge für die Betätigung des Stellglieds zum Erreichen der Streckgrenze bis zum vorgegebenen Zeitpunkt oder Ablauf des vorgegebenen Zeitintervalls zu berechnen.

4. Vorrichtung nach einem der Ansprüche 1 bis 3, **dadurch gekennzeichnet, dass** die Steuerungseinrichtung mit mindestens einer, zu wenigstens einem industriellen Protokollstandard kompatiblen Datenkommunikationsschnittstelle (8) ausgebildet ist.

5. Vorrichtung nach einem der Ansprüche 1 bis 4, **dadurch gekennzeichnet dass** die Steuerungseinrichtung (1) mit mindestens einer Standard-Netzwerkschnittstelle (9) ausgebildet ist.

6. Vorrichtung nach Anspruch 4 oder 5, **dadurch gekennzeichnet, dass** die Steuerungseinrichtung (1) programmtechnisch eingerichtet ist mit einem Serverdienst und einer Benutzerschnittstelle zur Eingabe von Parametrierungsangaben und/oder zur Anzeige oder zur Ausgabe erfasster Sensordaten und/oder Berechnungsdaten über die Datenkommunikationsschnittstelle oder die Standard-Netzwerkschnittstelle.

7. Vorrichtung nach Anspruch 6, **dadurch gekennzeichnet, dass** der Serverdienst mit mindestens einer Auswertungs- und/oder Analyseeinheit zur Generierung von Auswertungs- und/oder Analyseergebnissen und zur Anzeige oder Ausgabe der Auswertungs- und/oder Analyseergebnissen über die Datenkommunikationsschnittstelle (8) oder die Standard-Netzwerkschnittstelle (9) ausgebildet ist.

8. Vorrichtung nach einem der Ansprüche 1 bis 7, **dadurch gekennzeichnet, dass** sämtliche Komponenten als gemeinsame Baueinheit ausgeführt sind.

9. Verfahren zur Steuerung des Blasfluiddurchflusses beim Blasformen von Behältern aus Vorformlingen mit einem Proportionalventil mit einem veränderbaren Durchflussquerschnitt, einem Stellglied zur Betätigung des Proportionalventils, einem Mittel zur Erfassung der Position des Stellglieds und Sensormitteln zur Erfassung des Ventileingangs- und Ventilausgangsdrucks, **dadurch gekennzeichnet, dass** ein Zeitpunkt ($t_3$) zur Erreichung der Streckgrenze für den Vorformling, ein Behältervolumen und ein Zeitraum zur Erreichung des Behältervolumens vorgebbar sind und mittels einer digitalen Steuerung (25) während der Vorblasphase ab dem Erreichen der Streckgrenze zur Laufzeit automatisiert zyklisch eine Berechnung von Steuerwerten für die Betätigung des Stellglieds zum Erreichen des vorgegebenen Behältervolumens innerhalb des vorgegebenen Zeitraums erfolgt und das Stellglied entsprechend der berechneten Steuerwerte betätigt wird, wobei in jedem Berechnungszyklus die Berechnung des jeweils nächsten Steuerwerts unter Berücksichtigung des bis zum jeweiligen Berechnungszyklus erreichten, anhand der bisherigen Stellgliedpositionen und des bisherigen Druckverlaufs berechneten Behältervolumens erfolgt.

10. Verfahren nach Anspruch 9, **dadurch gekennzeichnet, dass** die Berechnung der Steuerwerte in jedem Berechnungszyklus mit der funktionalen Maßgabe eines möglichst gleichmäßigen Behälterwachstums bis zum Erreichen des vorgegebenen Behältervolumens innerhalb des vorgegebenen Zeitraums erfolgt.

11. Verfahren nach Anspruch 9 oder 10, **dadurch gekennzeichnet, dass** zusätzlich mindestens ein Behälterzwischenvolumen und jeweils ein Zwischenzeitraum zur Erreichung des Behälterzwischenvolumens vorgebbar sind, wobei die Berechnung der Steuerwerte in jedem Berechnungszyklus unter Berücksichtigung sämtlicher vorgegebenen Behälterzwischenvolumen und Zwischenzeiträume erfolgt.

12. Verfahren nach einem der Ansprüche 9 bis 11, **dadurch gekennzeichnet, dass** das Erreichen der Streckgrenze als Druckwert vorgebbar ist.

13. Verfahren nach einem der Ansprüche 9 bis 11, **dadurch gekennzeichnet, dass** das Erreichen der Streckgrenze als Zeitpunkt ($t_3$) oder als Zeitintervall ab dem Beginn der Vorblasphase oder der Einleitung des Blasfluids vorgebbar ist und mittels der digitalen Steuerung eine Ermittlung des Erreichens der Streckgrenze als Auswertung des Ventilausgangsdrucks durch die Erfassung einer Druckspitze erfolgt und eine Steuerfolge für die Betätigung des Stellglieds zum Erreichen der Streckgrenze bis zum vorgegebenen Zeitpunkt oder Ablauf des vorgegebenen Zeitintervalls berechnet wird.

## Claims

1. Device (1) for controlling the blowing fluid flow during the blow molding of containers from preforms, comprising a proportional valve (2) having a modifiable flow cross section, an actuator (5) for actuating the proportional valve, a means (15) for detecting the position of the actuator (5), sensor means (23, 23') for detecting the valve inlet and valve outlet pressure and a digital control apparatus (6),
   **characterized in that** the control apparatus (1) is programmed to calculate cyclically, in a manner automated to the runtime, control values for the actuation of the actuator such that a specified container volume is reached within a specified time period, during the pre-blowing phase once a specifiable point in time ($t_3$) is reached, which point in time corresponds to the yield point of the preform being reached, the calculation of the next control value in each case being performed in each calculation cycle such that the container volume which is reached by the relevant calculation cycle and can be calculated on the basis of the previous actuator positions and the previous pressure curve is taken into account.

2. Device according to claim 1, **characterized in that** the fact of the yield point being reached is specifiable as a pressure value.

3. Device according to claim 1, **characterized in that** the fact of the yield point being reached is specifiable as a point in time ($t_3$) or as a time interval from the beginning of the pre-blowing phase or the introduction of the blowing fluid, and the control apparatus (1) is programmed to determine that the yield point has been reached by evaluating the valve outlet pressure as the detection of a pressure peak, and to calculate a control sequence for the actuation of the actuator such that the yield point is reached by the specified point in time or by the time the specified time interval has elapsed.

4. Device according to any of claims 1 to 3, **characterized in that** the control apparatus is designed having at least one data communications interface (8) which is compatible with at least one industrial protocol standard.

5. Device according to any of claims 1 to 4, **characterized in that** the control apparatus (1) is designed having at least one standard network interface (9).

6. Device according to either claim 4 or claim 5, **characterized in that** the control apparatus (1) is programmed to have a server service and a user interface for inputting parametrization information and/or for displaying or outputting detected sensor data and/or calculation data via the data communications interface or the standard network interface.

7. Device according to claim 6, **characterized in that** the server service is designed having at least one evaluation and/or analysis unit for generating evaluation and/or analysis results and for displaying or outputting the evaluation and/or analysis results via the data communications interface (8) or the standard network interface (9).

8. Device according to any of claims 1 to 7, **characterized in that** all of the components are designed as a common structural unit.

9. Method for controlling the blowing fluid flow during the blow molding of containers from preforms, using a proportional valve having a modifiable flow cross section, an actuator for actuating the proportional valve, a means for detecting the position of the actuator and sensor means for detecting the valve inlet and valve outlet pressure, **characterized in that** a point in time ($t_3$) at which the yield point for the preform is reached, a container volume and a time period in which the container volume is achieved are specifiable and, by means of a digital controller (25), control values for the actuation of the actuator such that the specified container volume is reached within the specified time period are calculated cyclically, in a manner automated to the runtime, during the pre-blowing phase once the yield point is reached, and the actuator is actuated according to the calculated control values, the calculation of the next control value in each case being performed in each calculation cycle such that the container volume which is reached by the relevant calculation cycle and calculated on the basis of the previous actuator positions and the previous pressure curve is taken into account.

10. Method according to claim 9, *characterized in that* the control values are calculated in each calculation cycle with the functional requirement of container growth that is as uniform as possible until the specified container volume is reached within the specified time period.

11. Method according to either claim 9 or claim 10, **characterized in that** at least one intermediate container volume and in each case one intermediate time period for reaching the intermediate container volume are also specifiable, the control values being calculated in each calculation cycle such that all specified intermediate container volumes and intermediate time periods are taken into account.

12. Method according to any of claims 9 to 11, **characterized in that** the fact of the yield point being reached is specifiable as a pressure value.

13. Method according to any of claims 9 to 11, **characterized in that** the fact of the yield point being reached is specifiable as the point in time ($t_3$) or as the time interval from the beginning of the pre-blowing phase or the introduction of the blowing fluid, and, by means of the digital controller, the fact of the yield point being reached is determined as an evaluation of the valve outlet pressure by detecting a pressure peak, and a control sequence is calculated for the actuation of the actuator such that the yield point is reached by the specified point in time or by the time the specified time interval has elapsed.

**Revendications**

1. Dispositif de commande (1) du débit de fluide de soufflage lors du soufflage de récipients à partir de préformes, comprenant une vanne proportionnelle (2) comportant une section de passage variable, un actionneur (5) destiné à actionner la vanne proportionnelle, un moyen (15) pour détecter la position de l'actionneur (5), un moyen de capteur (23, 23') pour détecter la pression d'entrée de soupape et de sortie de soupape et un dispositif de commande numérique (6),
**caractérisé en ce que** le dispositif de commande (1) est configuré en termes de technologie de programme pour calculer par la suite, de manière cyclique et automatisée, pendant la phase de pré-soufflage dès l'atteinte d'un instant pouvant être prédéterminé ($t_3$), qui correspond à l'atteinte de la limite élastique de la préforme, les valeurs de commande pour l'actionnement de l'actionneur pour atteindre un volume de récipient prédéterminé pendant une période de temps prédéterminée, le calcul de la valeur de commande suivante ayant lieu dans chaque cycle de calcul, compte tenu du volume du récipient obtenu jusqu'au cycle de calcul respectif pouvant être calculé sur la base des positions actuelles de l'actionneur et de la courbe de pression actuelle.

2. Dispositif selon la revendication 1, **caractérisé en**

**ce que** l'atteinte de la limite élastique peut être prédéterminée en tant que valeur de pression.

3. Dispositif selon la revendication 1, **caractérisé en ce que** l'atteinte de la limite élastique en tant qu'instant ($t_3$) ou en tant qu'intervalle de temps à partir du début de la phase de pré-soufflage ou de l'introduction du fluide de soufflage peut être prédéterminée, et que le dispositif de commande (1) est configuré en termes de technologie de programme pour déterminer l'atteinte de la limite élastique par l'évaluation de la pression de sortie de vanne comme détection d'un pic de pression et calculer une séquence de commande pour l'actionnement de l'actionneur afin d'atteindre la limite élastique à l'instant prédéterminé ou à l'expiration de l'intervalle de temps prédéterminé.

4. Dispositif selon l'une des revendications 1 à 3, **caractérisé en ce que** le dispositif de commande est doté d'au moins une interface de communication de données (8) compatible avec au moins une norme de protocole industriel.

5. Dispositif selon l'une des revendications 1 à 4, **caractérisé en ce que** le dispositif de commande (1) est doté d'au moins une interface réseau standard (9).

6. Dispositif selon la revendication 4 ou 5, **caractérisé en ce que** le dispositif de commande (1) est configuré en termes de technologie de programme avec un service serveur et une interface utilisateur pour saisir des informations de paramétrage et/ou pour afficher ou émettre des données de capteur détectées et/ou des données de calcul par l'intermédiaire de l'interface de communication de données ou de l'interface réseau standard.

7. Dispositif selon la revendication 6, **caractérisé en ce que** le service serveur est doté d'au moins une unité d'évaluation et/ou d'analyse pour générer des résultats d'évaluation et/ou d'analyse et pour afficher ou émettre les résultats d'évaluation et/ou d'analyse par l'intermédiaire de l'interface de communication de données (8) ou de l'interface réseau standard (9).

8. Dispositif selon l'une des revendications 1 à 7, **caractérisé en ce que** tous les composants sont conçus comme une unité structurelle commune.

9. Procédé pour commander le débit de fluide de soufflage pendant le moulage par soufflage de récipients à partir de préformes avec une soupape proportionnelle à section de passage variable, un actionneur pour actionner la soupape proportionnelle, un moyen pour détecter la position de l'actionneur et des moyens de capteur pour détecter la pression d'entrée de soupape et la pression de sortie de soupape, **caractérisé en ce qu'un** instant ($t_3$) pour atteindre la limite élastique pour la préforme, un volume de récipient et une période pour atteindre le volume de récipient peuvent être prédéterminés, et, qu'au moyen d'une commande numérique (25) pendant la phase de pré-soufflage à partir de l'atteinte de la limite élastique, un calcul de valeurs de commande pour l'actionnement de l'actionneur a lieu par la suite de manière cyclique et automatisée pour atteindre le volume de récipient prédéterminé pendant la période prédéterminée, et que l'actionneur est actionné conformément aux valeurs de commande calculées, le calcul de la valeur de commande suivante ayant lieu dans chaque cycle de calcul avec prise en considération du volume de récipient atteint jusqu'au cycle de calcul respectif, calculé sur la base des positions actuelles de l'actionneur et de la courbe de pression actuelle.

10. Procédé selon la revendication 9, **caractérisé en ce que** le calcul des valeurs de commande a lieu à chaque cycle de calcul avec la condition fonctionnelle d'une croissance de récipient la plus uniforme possible jusqu'à ce que le volume prédéterminé du récipient soit atteint dans la période prédéterminée.

11. Procédé selon la revendication 9 ou 10, **caractérisé en ce qu'**au moins un volume intermédiaire de récipient et, à chaque fois, une période intermédiaire pour atteindre le volume intermédiaire de récipient peuvent également être prédéterminés, le calcul des valeurs de commande ayant lieu dans chaque cycle de calcul, compte tenu de tous les volumes intermédiaires de récipient prédéterminés et de toutes les périodes intermédiaires prédéterminées.

12. Procédé selon l'une des revendications 9 à 11, **caractérisé en ce que** l'atteinte de la limite élastique peut être prédéterminée en tant que valeur de pression.

13. Dispositif selon la revendication 11, **caractérisé en ce que** l'atteinte de la limite élastique en tant qu'instant ($t_3$) ou en tant qu'intervalle de temps à partir du début de la phase de pré-soufflage ou de l'introduction du fluide de soufflage peut être prédéterminée et que, au moyen de la commande numérique, une détermination de l'atteinte de la limite élastique comme évaluation de la pression de sortie de soupape a lieu par la détection d'un pic de pression, et qu'une séquence de commande pour l'actionnement de l'actionneur est calculée pour atteindre la limite élastique jusqu'à l'instant prédéterminé ou jusqu'à l'expiration de l'intervalle de temps prédéterminé.

# Fig. 1

Fig. 2

Fig. 3

EP 3 541 599 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19843053 A1
- DE 202004018237 U1
- DE 10240252 A1
- FR 0610618 A
- EP 2101984 B1
- EP 2097242 B1
- EP 2094467 B1
- DE 102006061301 A1
- DE 102008013419 A1
- US 8721940 B2